(19) Europäisches Patentamt
European Patent Office
Office européen des brevets

(11) **EP 4 261 690 A1**

(12) **EUROPEAN PATENT APPLICATION**

(43) Date of publication:
**18.10.2023 Bulletin 2023/42**

(21) Application number: **23167328.6**

(22) Date of filing: **11.04.2023**

(51) International Patent Classification (IPC):
***G06F 11/34*** (2006.01)

(52) Cooperative Patent Classification (CPC):
**G06F 11/3466; G06F 11/3409; G06F 11/3452;**
G06F 2201/80; G06F 2201/88

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.04.2022 FI 20225316**

(71) Applicant: **DB Pro Oy**
**00180 Helsinki (FI)**

(72) Inventor: **SAVOLAINEN, Jani K.**
**00120 Helsinki (FI)**

(74) Representative: **Boco IP Oy Ab**
**Kansakoulukatu 3**
**00100 Helsinki (FI)**

(54) **EARLY WARNING MECHANISM ON DATABASE MANAGEMENT SYSTEM WORKLOAD**

(57) The present invention relates to a method for determining early warning on workload in a database system. The method comprises collecting periodically data samples concerning a plurality of performance counters and determining periodically one or more data points representing a statistical characteristic of said data samples over a first time period. Based on a plurality of said data points, trend points for each of a plurality of performance counter components are determined, said trend points representing a statistical characteristic determined on basis of the respective data points. Each performance counter component's current trend, determined based on the trend points over a second time period, is compared to a determined baseline trend of the same performance counter component. Any significant deviations determined based on comparisons of the current trends and the baseline trends are classified into severity classes, and an early warning of a possible future problem in the DBMS system is given based on number of said deviations of performance counter components concerning any single performance counter being categorized into at least one of said severity classes.

Early warnings

| Source | Counter | Slope | | Volatility | | Skew | | Kurtosis | |
|--------|---------|-------|---|-----------|---|------|---|----------|---|
| MY_DOMAIN.SOURCEDB2 | CPU USAGE % (MAX) | +179 % | (R) | +70 % | (Y) | -125 % | (G) | +17 % | (G) |
| MY_DOMAIN.AGREPLICA01 | PROCESSOR QUEUE LENGTH (AVG) | +90 % | (Y) | +17 % | (G) | +88 % | (Y) | -91 % | (G) |
| MY_DOMAIN.AGREPLICA03 | CPU USAGE % (AVG) | -37 % | (G) | +27 % | (G) | -44 % | (G) | +69 % | (Y) |
| MY_DOMAIN.AGREPLICA01 | PROCESSOR QUEUE LENGTH (MAX) | +76 % | (Y) | +23 % | (G) | -121 % | (G) | -74 % | (G) |
| MY_DOMAIN.AGREPLICA01 | CPU USAGE % (AVG) | +90 % | (Y) | 0 % | (G) | -192 % | (G) | -31 % | (G) |
| MY_DOMAIN.AGREPLICA01 | CPU USAGE % (MAX) | +76 % | (Y) | +77 % | (Y) | -143 % | (G) | -188 % | (G) |
| MY_DOMAIN.SOURCEDB2 | PROCESSOR QUEUE LENGTH (MAX) | +179 % | (R) | +26 % | (G) | -300 % | (G) | -162 % | (G) |
| MY_DOMAIN.AGREPLICA03 | CPU USAGE % (MAX) | -95 % | (G) | +64 % | (Y) | -314 % | (G) | -21 % | (G) |
| MY_DOMAIN.AGREPLICA02 | CPU USAGE % (AVG) | -578 % | (G) | +25 % | (G) | -153 % | (G) | +98 % | (Y) |
| MY_DOMAIN.SOURCEDB1 | PROCESSOR QUEUE LENGTH (AVG) | -395 % | (G) | +75 % | (Y) | -563 % | (G) | +2 % | (G) |
| MY_DOMAIN.GOVDB16 | PROCESSOR QUEUE LENGTH (AVG) | -1687 % | (G) | -2 % | (G) | +126 % | (R) | -198 % | (G) |
| MY_DOMAIN.GOVDB16 | PROCESSOR QUEUE LENGTH (MAX) | -18123 % | (G) | +34 % | (G) | +21 % | (G) | +57 % | (Y) |

Figure 7

# Description

## Field

The present invention relates to a method, a system and a computer program product related to workload monitoring in a computer system. More particularly, a method, a system and a computer program product are provided for predictive performance monitoring of a database management system (DBMS), in particular database servers thereof, and especially to a system, method and a computer program product for recognizing and predicting changes in statistical nature of workloads that may degrade system performance.

## Background

It is difficult to foresee long-term hardware performance problems when monitoring tens of different DBMS performance counters such as server central processing unit (CPU) usage % , processor queue, random access memory (RAM) utilization, instance memory page life expectancy (PLE), latch wait time, batch requests / sec, database storage I/O, throughput, memory plan cache size, buffer pool size, to name a few. This often leads into a situation, wherein subtle changes in the DBMS server workload profile start to excessively consume physical hardware resources and potentially slow down the system or risk overall performance and availability of the system.

Typically, DBMS monitoring software has predefined baseline values set for "normal" performance counter workloads. Threshold points, such as statistically determined warnings and alert thresholds, are used to determine what is "normal" value and what is beyond "normal". For example, if server CPU usage % exceeds 80% over 5 consecutive minutes there will be a warning and if the server CPU usage % exceeds 90% there will be an alert. Weakness in such alerting is that it is black-and-white as well as reactive: Only when the workload indicates that something seems to be really wrong at the moment, there will be an alert.

In some more advanced monitoring mechanisms, various trends are compared against existing performance counter workload, which results in better understanding of the average momentum of the workload over time in near future, therefore being more proactive and giving a database administrator (DBA) more time to react potential problem. For example, if there is a CPU usage % in consecutive minutes in level of: 5, 10, 20, and 40, most likely the fifth minute will be on 80% mark and therefore should give an alert.

But still, above mentioned alerting mechanisms are not able to predict more complex, subtle changes in the DBMS workloads, which may cause performance problems in the hardware now or in the future. For that purpose, we need more advanced statistical analysis.

## Description of the related art

Patent application US2021216848 discloses a system monitoring and management tool and method that is based on generation an anomaly signal from time-series data collected from components of a computer system.

## Summary

An object is to provide a method and apparatus so as to provide an improved early warning method, where at least one of the disadvantages is eliminated or at least alleviated. The objects of the present invention are achieved with a method, a system and a computer program product according to the characterizing portion of independent claims. The preferred embodiments of the invention are disclosed in the dependent claims.

The present invention is based on the idea of comparing current trends of a plurality of performance counter components to respective baseline trends representing the same performance counter component over a longer time period. In this context, performance counter components are determined as a variety of statistical characteristics of a respective performance counter metric.

According to a first method aspect, a computer-implemented method is provided, comprising collecting periodically a plurality of data samples concerning a plurality of performance counters of a database management system, DBMS, said performance counters comprising at least one of CPU usage and processor queue length, and determining periodically one or more data points, wherein each data point represents statistical characteristic, such as average or peak value, of one of said performance counters, said statistical characteristic being determined based on a plurality of said data samples taken over a first time period, and storing said data points. The method further comprises, based on a plurality of said data points, periodically determining and storing a trend point for each of a plurality of performance counter components. The performance counter component represents a statistical characteristic of the respective performance counter, determined based on the plurality of data points stored over a second time period. The performance counter component is selected from a group comprising slope, volatility, skewness and kurtosis. The method further comprises determining a current trend of each of the plurality of performance counter components based on a plurality of respective trend points. The current trend comprises all trend points determined during the second time period, which is longer than the first time period. The method further comprises determining a baseline trend for each of said plurality of performance counter components. The baseline trend comprises a plurality of trend points of the respective performance counter component over a third time period, which is longer than the second time period. The method comprises comparing each determined current trend to the respective baseline trend, and, upon detecting a deviation of the current trend from the respective baseline trend that exceeds at least one threshold, categorizing the deviation into one of a plurality of severity classes selected from a group comprising a warning, an alert and a critical alert. The method also comprises providing in a user interface an early warning of a possible future problem in the DBMS system based on number of said deviations concerning at least two different performance counter components of any single performance counter being categorized into at least one of said severity classes.

According to a second method aspect, thresholds applied to categorizing a deviation to one of the severity classes are determined individually for each DBMS performance counter component.

According to a third method aspect, said thresholds applied for categorizing a deviation to one of the severity classes are adjusted using machine learning wherein the machine learning is taught using historical performance counter data and actual performance problems detected in a DBMS.

According to a fourth method aspect, said thresholds applied for categorizing a deviation to one of the severity classes are determined statistically based on the respective baseline trend.

According to a fifth method aspect, an early warning is categorized based on number of said deviations being categorized into a warning and/or on number of said deviations being categorized into an alert and/or number of said deviations being categorized into a critical alert and/or total number of said deviations being categorized in any of the severity classes indicating an alert.

According to a sixth method aspect, the first period is an hour or less than an hour, wherein new trend points are determined daily, wherein the second period is a month, and the third period is at least 3 months.

According to a seventh method aspect, the third time period immediately precedes the second time period, or the third time period and the second time period mutually overlap such that the latest data points used for determining the last trend point of the current trend and the baseline trend are the same data points.

According to an eighth method aspect, the new trend point for the current trend is determined periodically based on all data points stored over duration of a sliding window having length of the second period. The new trend point for the baseline trend is determined periodically based on all data points stored over duration of a sliding window having length of the third period.

According to a ninth aspect, future development of the current trend is extrapolated based on a plurality of recent trend points of the current trend for predicting whether the current trend forecasts appearing of a problem in near future.

According to another aspect, a computer program product is provided, comprising computer executable code which, when executed by a computer or computer system, performs the method according to any one of the above method aspects.

According to a further aspect, a computer readable medium is provided comprising computer executable code which, when executed by a computer or computer system, performs the method according to any one of the above method aspects.

The present invention has the advantage that it enables predicting complex and/or subtle changes in DBMS workloads, which may cause performance problems in the hardware now or only later in the future.

**Brief description of the drawings**

In the following the invention will be described in greater detail, in connection with preferred embodiments, with reference to the attached drawings, in which

Figure 1 illustrates skewness.
Figure 2 illustrates basic types of kurtosis.
Figure 3 illustrates schematically a time series of a performance counter component
Figure 4 illustrates schematically another time series of a performance counter component
Figure 5 illustrates steps for generating trend data
Figure 6 illustrates a processing an individual performance metric component
Figure 7 illustrates an example of an early warning user interface

**Detailed description**

In this context, DBMS refers to Database Management System.

In this context, DBA refers to Database Administrator.

In this context, Processor queue refers to a collection of tasks in queue that are waiting to be processed by a central processor unit (CPU).

In this context, Page Life Expectancy (PLE) refers to an age of a data page in seconds in a buffer cache or a buffer memory after querying tables with a loading data page into the buffer cache or buffer memory. Page Life Expectancy value (PLE value) indicates memory pressure in allocated memory towards an SQL Server instance.

In this context, IOPS (Input/output operations per second) refers to an input/output performance measurement used to characterize computer storage devices like hard disk drives (HDD), solid state drives (SSD), and storage area networks (SAN). Like many other benchmarks, IOPS numbers published by storage device manufacturers do not directly indicate real-world application performance.

In this context, throughput (Input/output operations of data pages (MB) per second) refers to an input/output performance measurement used to characterize computer storage devices like hard disk drives (HDD), solid state drives (SSD), and storage area networks (SAN). Like many other benchmarks, IOPS numbers published by storage device manufacturers do not directly correspond to real-world application performance.

A great majority of DBMS workloads in various domains are clearly seasonal and therefore highly predictable for example on monthly basis. This seasonality enables dividing each performance counter into different performance counter components that describe characteristics of the workload over time on seasonal basis as a current trend. With performance counter components we refer to certain statistical characteristics of the performance counter, which will be discussed in more detail.

In the following description, a single example is used with typical time scales and time periods applicable to a typical DBMS system with monthly seasonality. As understood by a skilled person, the invention is not limited to updating the trends on daily basis and determining the current trend over a period of a month but is equally applicable to any other time spans. For example, the current trend can be determined biweekly, weekly or daily, or over a period that is longer than one month. All time periods can be adjusted for example based on known seasonality of workloads of the supervised DBMS.

Comparing the current trend of the performance counter component to a baseline trend of the respective performance counter component indicates whether the workload changes or not. The baseline trend is based on the same performance counter component as the current trend, both in the same system. The baseline trend is determined over data points covering a significantly longer time period than data points used for determining the current trend. The underlying idea is to compare a plurality of different current trends of various performance counter components against the respective baseline trends and see whether there is significant deviation between these trends. A warning or an alert is given for each performance counter component if the change of current trend exceeds a respective predefined threshold in comparison to the baseline trend. Thresholds (threshold values) may be determined as a predetermined absolute amount of deviation from the respective baseline trend or as a percentual difference from the baseline trend. A threshold for a warning should always be lower than threshold for an alert, so that a smaller change in a trend first causes a warning and a greater change in the trend causes an alert. In addition, number of warnings and alerts for different performance counter components of the same performance counter are used for determining severity of an overall early warning. The more of these trend comparisons cause a warning or alert, the higher the risk of future problems.

According to some embodiments, thresholds for warnings and/or alerts and/or critical alerts are determined using machine learning. The machine learning system can be taught using historical performance counter data and actual performance problems detected in a DBMS.

An example of a current trend is a series of daily determined and stored running average values of a performance counter component over a sliding window covering last month (i.e. last 30 days). This current trend is compared against a baseline trend determined likewise, but by a 3-month running average of the same performance counter component. Any statistical measure of a selected performance counter can be aggregated daily on basis of a plurality of data samples of the respective performance counter value. For example, data samples of the performance counter can be obtained every minute, and the performance counter data point, which itself is typically a statistical value such as an average or maximum (peak value) of the performance counter, is aggregated hourly based on these data samples. The respective statistical value representing value the performance counter component today is determined based on these hourly data points. The value the performance counter component today, referred to as a trend point, can be a statistical value determined over all stored hourly data points over the entire month ending today. Alternatively, the trend point is determined based on a shorter time period, for example just based on aggregated performance counter data points concerning a week or even a single day.

The baseline trend is based on like trend points obtained daily over a longer time period, such as three months. The baseline trend time period preferably immediately precedes the time period of the current trend. Alternatively, the time period of the baseline trend can at least partially overlap with the time period of the current trend. In this context, a time period is considered significantly longer if it is at least 3 or 4 times as long as the reference time period. In order to make the baseline trend properly comparable with the current trend, length of the time period used for calculating the baseline trend should be equally long as the time period covered by the current trend. This can be achieved for example by dividing the baseline data points into a plurality of sub-trends, each covering a time period that equals in length the time period of the current trend and calculating an average of these sub-trends to be used as the baseline trend. For example, if the baseline trend is based on data points over three months and the current trend is based on data points over one month, the baseline trend may be determined by first determining three different sub-trends each covering a time period of one month, and calculating an average of these sub-trends to be used as the baseline trend. The three sub-trends are preferably consecutive in time so that the entire three-month period of data points is used for determining the baseline trend.

For obtaining a meaningful statistical input for determining wanted performance counter components, data points of the performance counter are in this example aggregated hourly based on individual data samples obtained for example every minute. As understood by a skilled person, the more data samples and data points the more accurate statistics but increasing number of data samples and/or data points and/or decreasing time period between obtaining data samples and/or data points also increases computational load. In tested DBMS systems, using hourly data points and aggregating these into daily representative performance counter component values forming trend points of the current and baseline trends has been empirically found to provide good early warning capability without excess computational load, since, as known in the art, DBMS systems are as such designed to handle large amounts of data.

Exemplary useful performance counters available from a typical DBMS system are average CPU usage %, maximum CPU usage %, average processor queue, maximum processor queue, average PLE, maximum PLE, average IOPS, maximum IOPS, average RAM utilization, maximum RAM utilization, average throughput, maximum throughput. Any known performance counter is applicable.

For the analysis, data points collected on workload of selected performance counters is processed to determine respective performance counter components. In a typical DBMS system, performance counters are monitored continuously, for example every minute. For purpose of the invented method, performance counter data is aggregated, preferably on hourly basis, into data points. Aggregation of performance counter data refers to determining one or more representative values of each performance counter for each aggregation time period. For example, performance counter data samples collected every minute are aggregated on hourly basis to obtain wanted performance counter data point, which is itself typically a statistical value such as an average, median, maximum or minimum value of the respective performance counter samples. Aggregated hourly performance counter data points are stored for further use.

Examples of the most useful performance counter components are:

**Slope:** Does the slope of the selected performance counter workload change? A trend of a linear regression slope of a performance counter workload is determined from collected data points over the current time period, such as a month, and compared to the respective baseline trend determined based on data points on the same performance counter collected over a longer baseline time period, which preferably occurred immediately before the time period of the current trend.

A linear regression model is determined as y = bx + a + ε, wherein b is the slope of the regression line, which is the rate of change for y as x changes. In a DBMS system, x is a time dimension and y is the respective performance counter workload value. In most performance counters, a positive slope is bad, and a negative slope or no slope at all is good and needs no action. If the current trend has a more positive slope than the baseline slope, things may be going in a bad direction. Thus, even a light increase in the slope may be an early indicator of forthcoming problem, which would not be easily detectable from observing just individual data points. A steep positive slope indicates a severe workload problem such as CPU spill.

**Volatility:** Does volatility of the performance counter workload change? A trend of volatility of the performance counter is determined based on respective data points over the current time period, such as a month, and compared to the respective baseline trend determined over the longer baseline time period. Monthly volatility can be calculated by using standard deviation (STDEV) of the natural logarithm of the specified expression (LOG) of current month value divided by the baseline trend, which translates on any time dimension level such as hour, day and month into:

1. Calculate the mean of the data set
2. Calculate the difference between each data value and the mean
3. Square the deviations
4. Add the squared deviations together
5. Divide the sum of the squared deviations by the number of data values

A higher result of this equation means higher volatility. Higher volatility may refer to intermittent performance issues on the respective performance counter workload such as bad SQL queries and thus, an increasing trend of volatility is useful as basis for warning and/or alerts. Warning or alert is determined based on respective thresholds, which are determined as a degree of change of the current trend in comparison to the baseline trend, while the deviation can be determined as an absolute deviation from the baseline trend or as a percentage difference from the baseline trend.

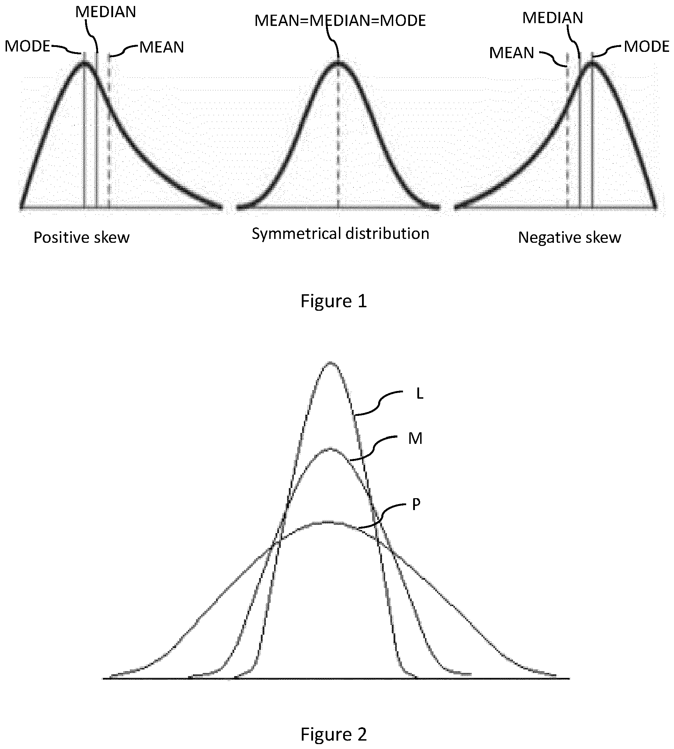

**Skewness:** Does skewness of the performance counter workload change? The known concept of skewness is illustrated in the figure 1. A positive skew means that most values in the statistical distribution fall on low values and a negative skew means that most values in the statistical distribution fall on high values. In the current system, a trend of the skewness value is determined based on respective performance counter data points over the current time period, such as a month, and compared to a baseline trend determined over a longer baseline time period, as explained with the slope above.

Positive skew can be detected by inspecting whether the mean value of distribution is higher than median and/or whether median is higher than mode (MEAN > MEDIAN > MODE). Additionally or alternatively, it may be evaluated how skewed the workload is, for example by calculating Pearson's second skewness coefficient $Sk2 = 3 * (MEAN - MEDIAN) / STDEV$, which indicates median skewness, and comparing that to the respective baseline trend. Abbreviation STDEV refers to standard deviation.

In most computing system performance counters, negative skew is bad and positive skew is good and needs no action. Negatively skewed distribution indicates more dense higher utilization levels of the workload over time and therefore may be an indicator of a potential threat on performance.

**Kurtosis:** Does the kurtosis of the performance counter workload change? A trend of the kurtosis value is determined based on data points of the respective performance counter over the current time period, such as a month, and compared to a baseline trend collected over a longer baseline time period, for example three or four months.

The figure 2 illustrates basic types of kurtosis, referred in the art as a leptokurtic distribution (L), a mesokurtic distribution (M) and a platykurtic distribution (P). A platykurtic distribution (P) has kurtosis less than normal distribution, wherein kurtosis is:

$$n * \Sigma^{n}_{i}(Y_i - \overline{Y})^4 / (\Sigma^{n}_{i}(Y_i - \overline{Y})^2)^2.$$

A platykurtic distribution indicates that the workload distributes over bigger values with higher volume over time and therefore detecting a platykurtic distribution of a performance counter component may be an indicator of potential threat on performance, if values get higher over time.

In the invented method, change of a statistical characteristic of workload on the performance counter, determined as a change of the current trend with respect to the baseline trend of the selected performance counter is used as basic metric. This change is preferably expressed as percentage or as an absolute value. Any suitable metrics can be used as values of performance counter components, and different metrics can be used for different performance counters and/or different performance counter components. One target is to visualize the outcome for the DBA, numerical values of metrics. Visual indicator of early warning can be implemented graphically, such that any numerical values can even remain internal in the system and thus not necessarily shown to the DBA in the user interface, but numerical values may also provide additional information to a skilled DBA. Threshold values for determining when a warning, alert and/or critical alert is to be given for any of the performance counter components are preferably design options, however in specified order of magnitude of risk, a lower risk being associated with a warning and a higher risk being associated with an alert. Alerts may also be given at different severity levels, such as alert and a critical alert. A warning or an alert of any performance counter component is triggered based on respective warning and alert thresholds, which are determined as a degree of change of the current trend in comparison to the baseline trend. The threshold values can be determined as an absolute deviation from the baseline trend or as a percentage difference from the baseline trend. Warning and alert thresholds are preferably determined from the long-term baseline trend. Any statistical method may be used for this. A non-limiting example is to calculate a threshold for an alert as average of the maximum and the average of the respective baseline trend and to calculate a threshold for a warning as average of the average and the above-calculated average of the maximum and the average of the respective baseline trend. The baseline trend is updated periodically, for example daily. Thus, also the threshold values for warning and alert are preferably updated periodically, and the threshold values are preferably determined over data points covering the same sliding window as the baseline trend.

The basic idea is to follow trends of all selected performance counter components to be able to identify if any of the trends are increasing and therefore indicating potential risk caused by a workload change. If all performance counter components, such as 4/4 or 3/3, have an increasing trend, in other words are increasing over time in an amount that is considered as warning or alert, the respective performance counter is overall more at risk than if only a fraction of performance counter components, such as 3/4, 2/4 or 1/4 in case of four performance counter components, or 2/3 or 1/3 in case of three performance counter components, increases simultaneously. Threshold level for giving a warning and/or giving an alert is preferably a design option as long as the basic rule that an alert indicates higher level of risk than a warning. On the other hand, if any of the selected performance counter components, has a steep increasing slope of a linear trend or the growth trend is exponential (y = ab" where a ≠ 0), this should rise an early warning, due the rapid workload change.

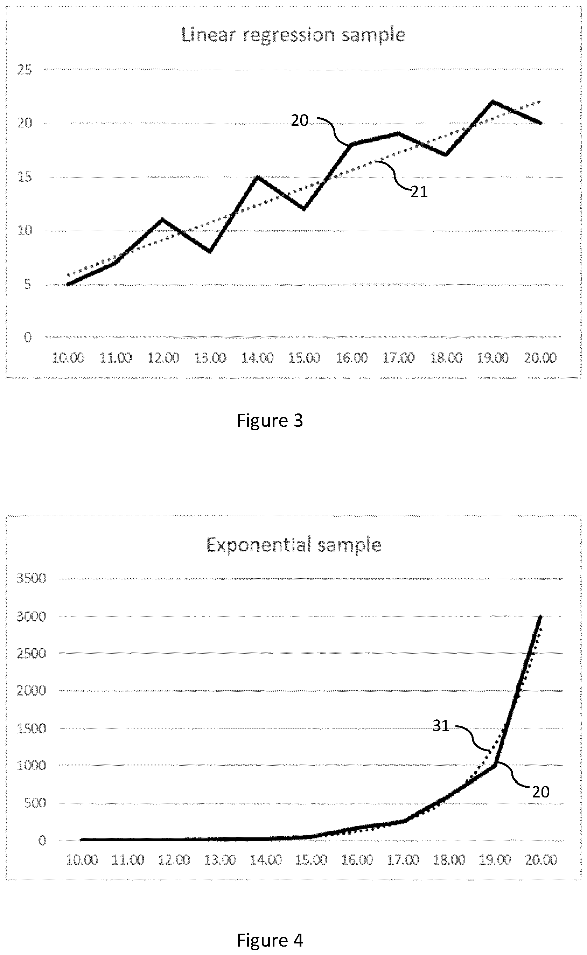

The figure 3 illustrates schematically a time series of an actual performance counter component (20). In this case, the time series and the current trend covers a time period of ten days, but any time period can be selected. In a typical DBMS system, current trend determined for a time period of a full month, i.e. 30 days has been found to provide effective and reliable early warning capability. Trend points of the performance counter component are determined daily based on respective, hourly obtained and stored data points, and the current trend (21) of the performance counter component is determined based on consecutive trend points by linear regression, the current trend having a determined, constant slope.

The figure 4 illustrates schematically another time series of an actual performance counter component (20) represented by a plurality of consecutive trend points which are determined daily based on hourly obtained data points, and a current trend (31) with an exponential growth. Such exponential growth trend of any individual performance counter component would typically trigger an alert or a critical alert, if such severity level is in use in the system.

Alerts are preferably given to an individual performance counter in following situations:

- If the individual performance counter component is on exponential trend

- If the individual performance counter component is on linear trend that is or is forecasted during next month to reach or exceed a predetermined threshold level based on the respective baseline trend

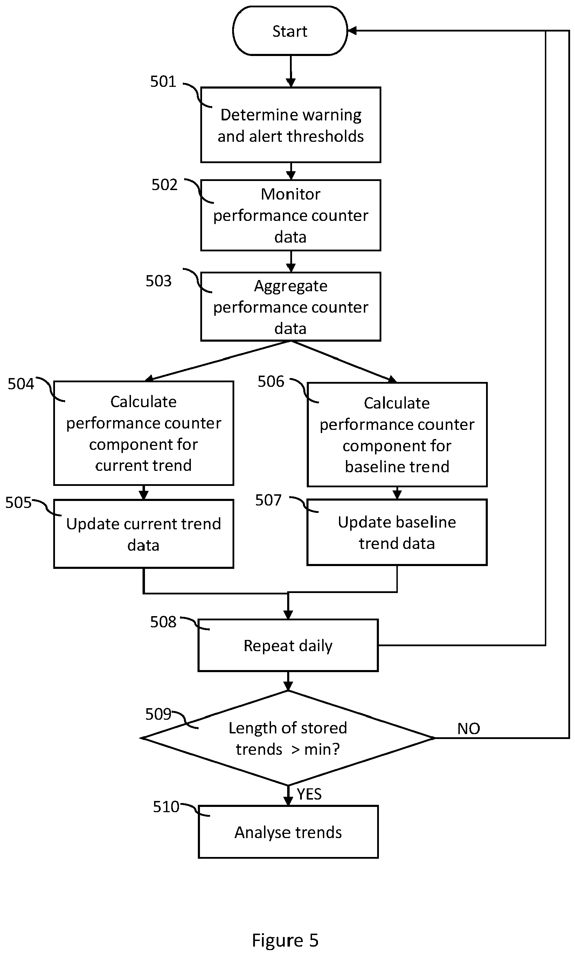

The figure 5 illustrates steps for generating trend data. In the step 501, warning and alert thresholds are determined. These thresholds can be updated later on, but this is of course not necessary so this step will be optional on subsequent process rounds, after the thresholds have been determined. When the warning and alert thresholds are determined mathematically, preferably statistically, on basis of the baseline trend, thresholds are preferably determined/updated every time the baseline trend is updated. Thus, if the baseline trend is updated daily, also the thresholds are re-calculated daily.

In the step 502, performance counter data is monitored. A new performance data sample can be collected for example every minute. Any known performance counter is applicable.

In the step 503, performance data samples are aggregated into performance data points. A performance data point is typically a statistical value determined based on perFormance data samples obtained over a period of time. In a typical example, perFormance data point represents a maximum, average or median of the performance data point over a first time period, which may be for example an hour.

In the step 504, a new trend point is calculated for the performance data component to be used in the current trend, based on performance data points. The new trend point is preferably a statistical value determined over a second time period, which is longer than the first data period. For example, the trend point may be determined based on all data points of the respective perFormance counter over period of a month preceding today. In the step 505, the current trend point is used for updating current trend data. The current trend data preferably covers a time period that equals the second time period, such that when the new trend point is added in the current trend, the oldest trend point is discarded that the current trend is calculated based on trend points included in the updated set of trend points.

In the step 506, a new trend point is calculated to be used in the baseline trend. Basic calculation is similar to the step 505, but the baseline trend is calculated over data collected during a third time period, which is significantly longer, i.e. at least 3 or 4 times longer than the second time period. The new trend point for the baseline trend is stored for later use.

In the step 507, the baseline trend data is updated. In the preferred embodiment, the baseline trend is determined based on a time period that precedes the current time period. Thus, if the second time period is one month and the third time period is three months, the baseline trend is determined based trend points, which were stored during a period between one month and four months before now. When baseline trend data is updated, oldest trend point is discarded and a new trend point is included in the baseline trend data that was determined at the same time (i.e. on the same day) as the respective oldest trend point of the current trend that is today discarded.

In the flow chart, steps 504 and 505 are performed in parallel with steps 506 and 507. However, these pairs of steps can be performed consecutively, such as 504, 505, 506, 507 or 506, 507, 504, 505.

The entire process from steps 503 to 508 is preferably repeated daily, as shown by the step 508. This way, both the current trend and the baseline trend receive daily a respective new trend point, while the oldest trend point is discarded daily.

Before a meaningful comparison of current and baseline trends can be performed, both trends shall have a predetermined minimum of trend points. Step 509 illustrates a step of checking whether the stored current trend and the stored baseline trend both have a length of a respective minimum value. The process therefore preferably proceeds to step 510 of analyzing trends of the performance counter component only after both trends fulfill a respective minimum trend length criterion. Since the baseline trend is determined over a longer period of time, also the minimum length criterion for the time period covered by the stored baseline trend data is assumed to be longer than the minimum length criterion for the time period covered by the stored current trend data.

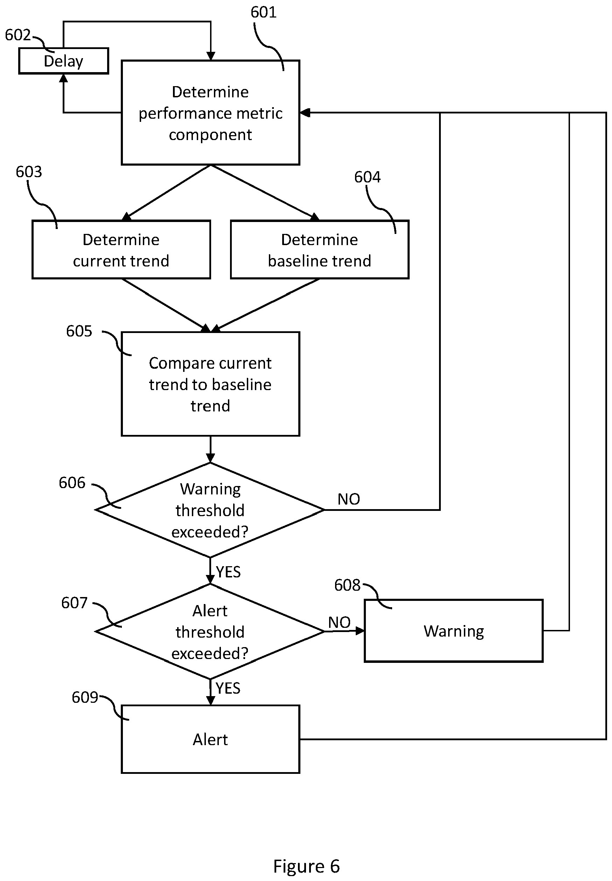

The figure 6 illustrates a processing an individual performance metric component.

The step 601 corresponds steps shown in the figure 5, in which trend points for the performance metric component are determined, by obtaining a plurality of respective performance metrics and determining the respective performance metric component over a time period.

The performance metric component is determined periodically, preferably daily, which is illustrated by the delay 602.

In the phase 603, the current trend is determined over a predetermined current trend time period, referred also as the second time period. For example, the current trend is determined for last month or last 30 days, which is a sliding window. In the phase 604, the baseline trend is determined over a predetermined baseline trend time period, which is significantly longer than the current trend time period. The baseline trend time period is also referred to as the third time period. In this example, current trend and baseline trend are determined in parallel, but these can be determined in any order.

In the phase 605, the current trend is compared to the baseline trend. This comparison leads to a series of decision steps, here illustrated with step 606, in which it is detected, whether the workload increases, which is detected by determining that the current trend deviates from the baseline trend. If there is no increase in the workload, the process returns to start. Increase of workload that needs to be addressed may be determined as a change in the performance counter component's current trend exceeding a threshold set for warning, which threshold may be an absolute deviation from the baseline trend or a percentage difference between the current trend and the baseline trend. In case there is a slope, exceeding a threshold may also be determined based on a predicted future value of the performance counter component, which can be extrapolated from the current trend.

If an increase of workload is detected, it is then it is further checked, in the phase 607, whether the increase is critical or not by comparing the current trend to a threshold value determined for alerts. If the change in the difference falls between the warning threshold value and the alert threshold value, a warning is given (step 608) and if the change in the difference exceeds the alert threshold value, an alert is given (step 609).

Similar performance counter component analysis is performed for a plurality of performance counters, using at least two, possibly three or four different performance counter components for each performance counter.

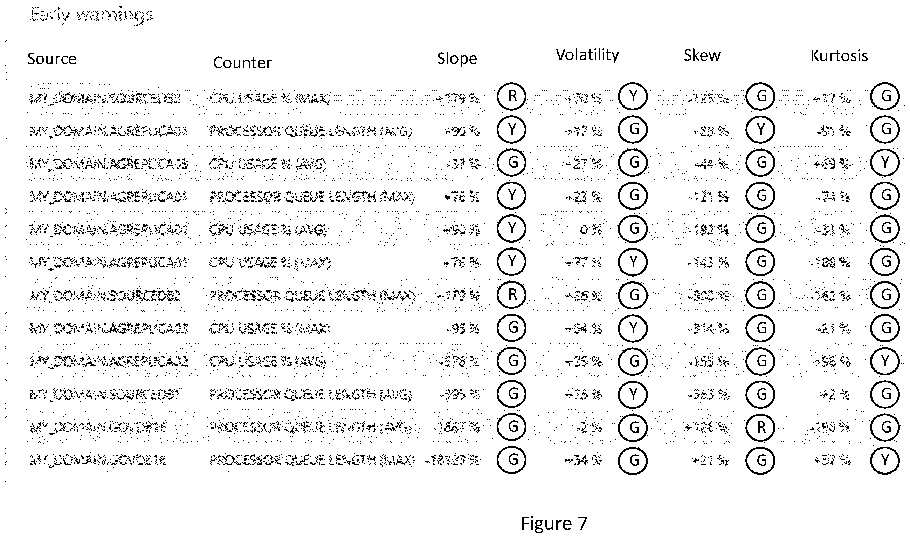

The figure 7 illustrates simple example of an early warning user interface implemented as "traffic lights" shown in a table, in which

- no warning of a performance counter component is indicated with a "green light" (G)
- a warning of a performance counter component is indicated with a "yellow light" (Y) and
- an alert of a performance counter component is indicated with a "red light" (R)

This exemplary user interface table shows a Source, with refers to a specific database by its name, a Counter, which refers to a specific performance counter, and three performance counter components determined for each of the performance counters. In this example, applied performance counter components are "Slope", "Volatility", "Skew", and "Kurtosis". The user interface in this example is provided with numerical values representing respective determined percentual change from the respective baseline trend shown next to the respective traffic light. This kind of visual user interface provides the DBA quickly an overview of whether there could be some problems predicted for the DBMS in future.

For each performance counter (Counter), an early warning is categorized based on detecting number of individual performance counter components that give a warning or alert.

 1) How many performance counter components have an alert or a warning (0 - 4 / 0 - 3)
 2) How many performance counter components have an alert (0 - 4 / 0-3)
 3) How many performance counter components have a warning (0 - 4 / 0 - 3)

This categorization can be visualized in a user interface provided to a DBA for example with performance counter component -specific "traffic lights", which indicate three levels of criticality:

 1) Green = Individual performance counter component not warning
 2) Yellow = Individual performance counter component warning with minor trend change
 3) Red = Individual performance counter component alerting with major trend change

If any of the performance counter components is/are alerting, which can be indicated by a red traffic light in the user interface, the early warning system gives preferably an alert, which is more critical than a warning. Furthermore, alerts can be categorized to a number of alert categories, such as A1, A2, A3, A4. Here A4 represents highest criticality, and it is given if all four performance counter components alert. Warnings can be categorized to a number of warning categories, such as W1, W2, W3, W4, wherein W4 indicates that all four performance counter components give a warning. A warning indicates that the performance counter component changes, but this change is not considered critical. The overall alert can be a combination of (A0...A4 && W0...W4), wherein A0W0 is no risk and A4W4 is highest risk. The above categorization example is given using four performance counter components as example, but the same type of combinatorial categorization can be applied to any number of categories, depending on number of selected performance counter components supervised.

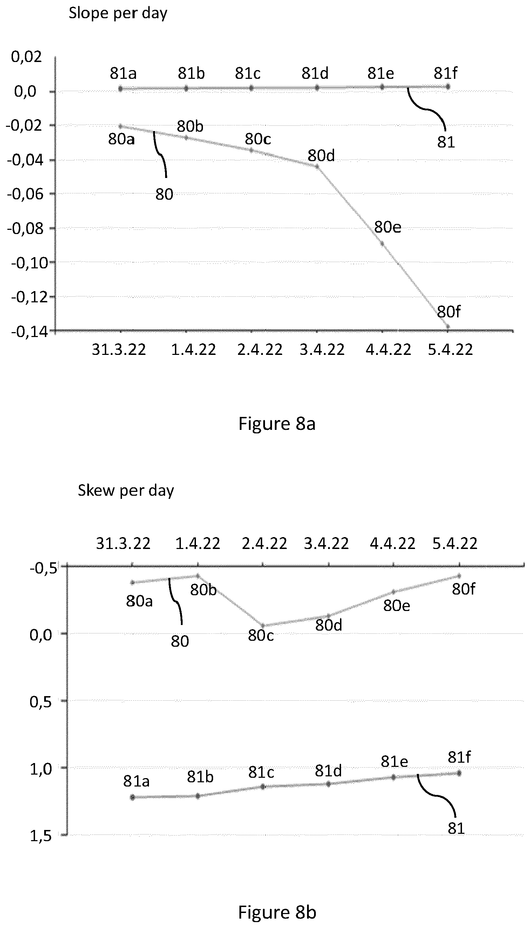

Figures 8a to 8d illustrate baseline trends and current trends of four different performance data components. Each trend point (80a, 80b, 80c, 80d, 80e, 80f) of the current trend (80) represents a single statistical value calculated based on data points stored during the previous month (or any other selected length of second period), until the respective date on which the respective trend point is stored. Each trend point (81a, 81b, 81c, 81d, 81e, 81f) of the baseline trend (81) represents a single statistical value calculated based on data points stored over three months (or any other selected length of third period longer than the second period) preceding data points corresponding to the current trend on that date. For example, if current date is 5.4.2022, second period is one month and third period is three months, data points for current trend point stored today are those stored between 6.3.2022 and 5.4.2022, and data points for baseline trend point stored today are those stored between 6.12.2021 and 5.3.2022. Thus, each trend point is determined based on slightly different data points using a sliding window.

In each figure 8a to 8d, trend points (80a, ...., 80f) of the current trend represent daily calculated values of the respective performance counter component determined based on data points over the sliding window one-month current trend period. Trend points (81a, ..., 81f) of the baseline trend represent daily calculated values of the respective performance counter components one month before the respective current trend points, based on data points over the sliding window three-month baseline time period.

Difference between daily trend points of the current trend and baseline trend determines the change between the two trends, which is used for determining warnings and/or alerts. If a warning or alert threshold is exceeded, change of the current trend can further be estimated for example with R-squared ($R^2$) analysis for determining whether the detected unfavorable change is linear or exponential in nature. Based on a plurality of recent trend points of the current trend, future trend points of the current trend may be predicted based on a plurality of recent trend points for next few days by extrapolation. For example, last three, four, five, six or seven trend points of the current trend may be used for such prediction. Thus, even a slight increase in the slope of the current trend may be an early indicator of a forthcoming problem in the system, which would not be easily detectable from observing just individual data points. A steep positive slope indicates a severe workload problem such as CPU spill.

The figure 8a shows an exemplary baseline trend (81) and current trend (80) for slope. Trend points (80a, ..., 80f; 81a, ..., 81f) are determined and stored in this example daily. In this example, the baseline trend (81) is almost constant, i.e. slope of the performance counter did not change much during the third time period covered by the baseline trend (81). However, the current trend (80) deviates from the baseline trend (81) almost exponentially, but rather than growing, the trend gets smaller.

The figure 8b shows an exemplary baseline trend (81) and current trend (80) for skew. Skew of this performance counter experiences clear changes in comparison to the baseline.

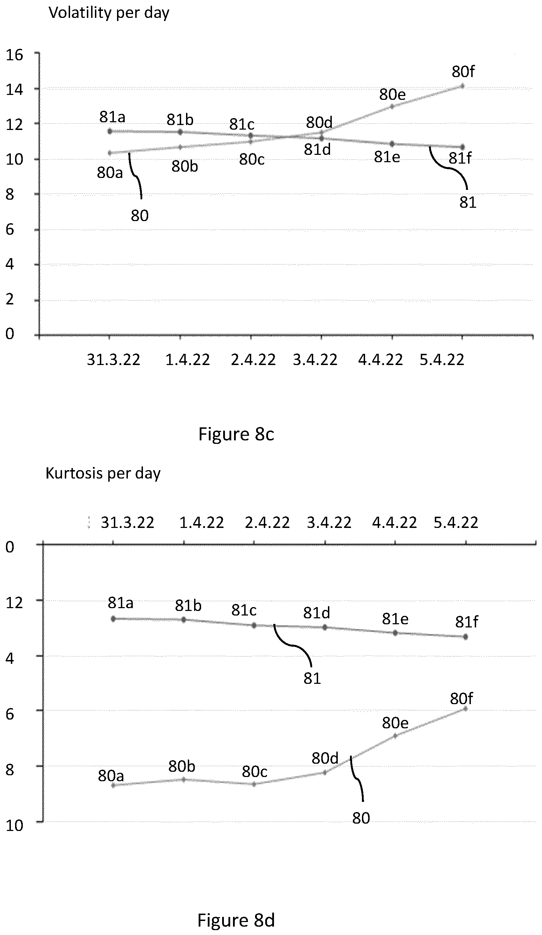

The figure 8c shows an exemplary baseline trend (81) and current trend (80) for volatility. Volatility of this performance counter has increased recently, which may indicate a problem in future and may trigger a warning or alarm on this performance counter component.

The figure 8d shows an exemplary baseline trend (81) and current trend (80) for kurtosis. The current trend indicates that kurtosis has recently been quite different from the baseline, but it approaches the baseline.

It is apparent to a person skilled in the art that as technology advanced, the basic idea of the invention can be implemented in various ways. The invention and its embodiments are therefore not restricted to the above examples, but they may vary within the scope of the claims.

**Claims**

**1.** A computer-implemented method, comprising

- collecting periodically a plurality of data samples concerning a plurality of performance counters of a database management system, DBMS, said performance counters comprising at least one of CPU usage and processor queue length,
- determining periodically one or more data points, wherein each data point represents statistical characteristic, such as average or peak value, of one of said performance counters, said statistical characteristic being determined based on a plurality of said data samples taken over a first time period, and storing said data points,
- based on a plurality of said data points, periodically determining and storing a trend point for each of a plurality of performance counter components, wherein the performance counter component represents a statistical characteristic of the respective performance counter, determined based on the plurality of data points stored over a second time period, wherein the performance counter component is selected from a group comprising slope, volatility, skewness and kurtosis,
- determining a current trend of each of the plurality of performance counter components based on a plurality of respective trend points, wherein the current trend comprises all trend points determined during the second time period, and wherein the second time period is longer than the first time period,
- determining a baseline trend for each of said plurality of performance counter components, wherein the baseline trend comprises a plurality of trend points of the respective performance counter component over a third time period, and wherein the third time period is longer than the second time period,
- comparing each determined current trend to the respective baseline trend,
- upon detecting a deviation of the current trend from the respective baseline trend that exceeds at least one threshold, categorizing the deviation into one of a plurality of severity classes selected from a group comprising a warning, an alert and a critical alert,
- providing in a user interface an early warning of a possible future problem in the DBMS system based on number of said deviations concerning at least two different performance counter components of any single performance counter being categorized into at least one of said severity classes.

**2.** The computer-implemented method according to claim 1, wherein thresholds applied to categorizing a deviation to one of the severity classes are determined individually for each DBMS performance counter component.

3. The computer-implemented method according to claim 2, wherein said thresholds applied for categorizing a deviation to one of the severity classes are adjusted using machine learning, wherein the machine learning is taught using historical performance counter data and actual performance problems detected in a DBMS.

4. The computer-implemented method according to claim 2, wherein said thresholds applied for categorizing a deviation to one of the severity classes are determined statistically based on the respective baseline trend.

5. The computer-implemented method according to any one of the preceding claims, wherein an early warning is categorized based on number of said deviations being categorized into a warning and/or on number of said deviations being categorized into an alert and/or number of said deviations being categorized into a critical alert and/or total number of said deviations being categorized in any of the severity classes indicating an alert.

6. The computer-implemented method according to any one of the preceding claims, wherein the first period is an hour or less than an hour, wherein new trend points are determined daily, wherein the second period is a month, and the third period is at least 3 months.

7. The computer-implemented method according to any one of the preceding claims, wherein the third time period immediately precedes the second time period, or the third time period and the second time period mutually overlap such that the latest data points used for determining the last trend point of the current trend and the baseline trend are the same data points.

8. The computer-implemented method according to any one of the preceding claims, wherein the new trend point for the current trend is determined periodically based on all data points stored over duration of a sliding window having length of the second period, and
wherein the new trend point for the baseline trend is determined periodically based on all data points stored over duration of a sliding window having length of the third period.

9. The computer-implemented method according to any one of the preceding claims, wherein future development of the current trend is extrapolated based on a plurality of recent trend points of the current trend for predicting whether the current trend forecasts appearing of a problem in near future.

10. A computer program product comprising computer executable code which, when executed by a computer or computer system, performs the method according to any one of claims 1 to 9.

11. A computer readable medium comprising computer executable code which, when executed by a computer or computer system, performs the method according to any one of claims 1 to 9.

MEDIAN

MODE—                  ⌐MEAN

MEAN=MEDIAN=MODE

MEDIAN

MEAN ⌐              ⌐MODE

Positive skew            Symmetrical distribution            Negative skew

Figure 1

L

M

P

Figure 2

Figure 3

Figure 4

Figure 5

Figure 6

## Early warnings

| Source | Counter | Slope | | Volatility | | Skew | | Kurtosis | |
|---|---|---|---|---|---|---|---|---|---|
| MY_DOMAIN.SOURCEDB2 | CPU USAGE % (MAX) | +179 % | R | +70 % | Y | -125 % | G | +17 % | G |
| MY_DOMAIN.AGREPLICA01 | PROCESSOR QUEUE LENGTH (AVG) | +90 % | Y | +17 % | G | +88 % | Y | -91 % | G |
| MY_DOMAIN.AGREPLICA03 | CPU USAGE % (AVG) | -37 % | G | +27 % | G | -44 % | G | +69 % | Y |
| MY_DOMAIN.AGREPLICA01 | PROCESSOR QUEUE LENGTH (MAX) | +76 % | Y | +23 % | G | -121 % | G | -74 % | G |
| MY_DOMAIN.AGREPLICA01 | CPU USAGE % (AVG) | +90 % | Y | 0 % | G | -192 % | G | -31 % | G |
| MY_DOMAIN.AGREPLICA01 | CPU USAGE % (MAX) | +76 % | Y | +77 % | Y | -143 % | G | -188 % | G |
| MY_DOMAIN.SOURCEDB2 | PROCESSOR QUEUE LENGTH (MAX) | +179 % | R | +26 % | G | -300 % | G | -162 % | G |
| MY_DOMAIN.AGREPLICA03 | CPU USAGE % (MAX) | -95 % | G | +64 % | Y | -314 % | G | -21 % | G |
| MY_DOMAIN.AGREPLICA02 | CPU USAGE % (AVG) | -578 % | G | +25 % | G | -153 % | G | +98 % | Y |
| MY_DOMAIN.SOURCEDB1 | PROCESSOR QUEUE LENGTH (AVG) | -395 % | G | +75 % | Y | -563 % | G | +2 % | G |
| MY_DOMAIN.GOVDB16 | PROCESSOR QUEUE LENGTH (AVG) | -1887 % | G | -2 % | G | +126 % | R | -198 % | G |
| MY_DOMAIN.GOVDB16 | PROCESSOR QUEUE LENGTH (MAX) | -18123 % | G | +34 % | G | +21 % | G | +57 % | Y |

Figure 7

Slope per day

Figure 8a

Skew per day

Figure 8b

Volatility per day

Figure 8c

Kurtosis per day

Figure 8d

Europäisches
Patentamt

European
Patent Office

Office européen
des brevets

## EUROPEAN SEARCH REPORT

Application Number

EP 23 16 7328

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2015/332488 A1 (BECK LAURA [US] ET AL) 19 November 2015 (2015-11-19) * abstract * * figure 2 * * paragraph [0025] – paragraph [0049] * * paragraph [0063] – paragraph [0088] * ----- | 1-11 | INV. G06F11/34 |
| A | JAMES BOUHANA ET AL: "Automated Discovery of Performance Envelopes", INTERNET MONITORING AND PROTECTION, 2007. ICIMP 2007. SECOND INTERNATIONAL CONFERENCE ON, IEEE; PI, 1 July 2007 (2007-07-01), pages 17-17, XP031115486, ISBN: 978-0-7695-2911-0 * the whole document * ----- | 1,10,11 | |

TECHNICAL FIELDS
SEARCHED (IPC)

G06F

The present search report has been drawn up for all claims

| Place of search | Date of completion of the search | Examiner |
|---|---|---|
| Munich | 9 August 2023 | Lanchès, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 7328

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | Publication date | Patent family member(s) | Publication date |
|---|---|---|---|
| US 2015332488 A1 | 19-11-2015 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021216848 A